(19) Europäisches Patentamt
European Patent Office
Office européen des brevets

(11) Veröffentlichungsnummer: **0 069 064**
**B1**

(12) # EUROPÄISCHE PATENTSCHRIFT

(45) Veröffentlichungstag der Patentschrift: **31.07.85**

(51) Int. Cl.[4]: **C 07 C 87/38**

(21) Anmeldenummer: **82810253.3**

(22) Anmeldetag: **14.06.82**

(54) **Neue Diamine und deren Herstellung.**

(30) Priorität: **19.06.81 GB 8119009**

(43) Veröffentlichungstag der Anmeldung: **05.01.83 Patentblatt 83/1**

(45) Bekanntmachung des Hinweises auf die Patenterteilung: **31.07.85 Patentblatt 85/31**

(84) Benannte Vertragsstaaten: **CH DE FR GB IT LI NL**

(56) Entgegenhaltungen:
**DE - A - 2 549 403**
**US - A - 4 024 185**
**US - A - 4 288 625**

(73) Patentinhaber: **CIBA-GEIGY AG, Postfach, CH-4002 Basel (CH)**

(72) Erfinder: **Howell, Frederick Harold, Dr., 27 High Bank, Atherton Lancashire M29 9HZ (GB)**
Erfinder: **Pfeifer, Josef, Dr., Brunnmattstrasse 32, CH-4106 Therwil (CH)**

**EP 0 069 064 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft neue Diamine und ein Verfahren zu deren Herstellung.

In der US 4 024 185 sind u. a. Polyamide aus 2-(4-Aminocyclohexyl)-1,1-dimethyläthylamin und aliphatischen, aromatischen oder aliphatisch-aromatischen Dicarbonsäuren oder amidbildenden Derivaten davon beschrieben. Diese Polyamide sind zum Teil kristallin. Sie absorbieren beträchtliche Mengen Wasser und sind in Bezug auf Hydrolysebeständigkeit und/oder Dimensionsstabilität unter dem Einfluß von Feuchtigkeit nicht voll zufriedenstellend, wodurch auch deren mechanische und elektrische Eigenschaften beeinträchtigt werden. Zudem sind die Glasumwandlungstemperaturen dieser Polyamide stark feuchtigkeitsanhängig, und Polyamide aus den obengenannten Diaminen und aromatischen Dicarbonsäuren oder amidbildenden Derivaten davon lassen sich nicht aus der Schmelze verarbeiten [vgl. auch Journal of Polymer Science: Polymer Chemistry Edition, Bd. 16, 2025–2038 (1978)].

Gegenstand der Erfindung sind [neue] Verbindungen der Formel I

$$X—(YQNH_2)_p \qquad (I)$$

worin p 1 oder 2 ist und die Reste $-QNH_2$ gleiche oder verschiedene Reste der Formel II

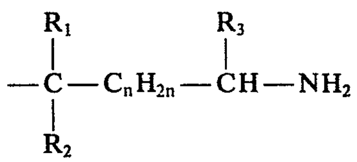

(II)

darstellen, worin n eine ganze Zahl von 1 bis 15, $R_1$ $C_{1-8}$-Alkyl, $R_2$ $C_{1-4}$-Alkyl oder $R_1$ und $R_2$ zusammen eine $C_{4-7}$-Alkylengruppe, $R_3$ Wasserstoff, $C_{1-6}$-Alkyl, $C_{3-8}$-Cycloalkyl oder $C_{6-10}$-Aryl und Y einen zweiwertigen Rest der Formel

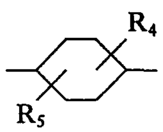

bedeuten, worin $R_4$ und $R_5$ Wasserstoff oder $C_{1-4}$-Alkyl sind oder, wenn p 1 ist, die Gruppe $R_4$ zusammen mit der Gruppe X eine durch die Gruppe $-QNH_2$ substituierte Tetramethylenkette darstellt, X $-NH_2$ oder $-QNH_2$ ist oder wie oben angegeben mit $R_4$ kombiniert sein kann, und, wenn p 2 ist, X eine direkte Bindung, $-CH_2-$ oder $-O-$ bedeutet, sowie Salze von Verbindungen der Formel I mit organischen oder anorganischen Säuren und Stereoisomere von Verbindungen der Formel I.

Durch $R_1$ dargestellte Alkylgruppen können geradkettig oder verzweigt sein und z. B. eine Methyl-, Äthyl-, n-Propyl-, Isopropyl-, n-Butyl-, Isobutyl-, sek.-Butyl-, n-Amyl-, n-Hexyl-, Hept-3-yl- oder n-Octylgruppe sein.

Stellen $R_2$, $R_4$ und/oder $R_5$ Alkylgruppen dar, so können diese geradkettig oder verzweigt sein und stellen z. B. Methyl, Äthyl, n-Propyl, Isopropyl, n-Butyl, Isobutyl oder sek.-Butyl dar. Bilden $R_1$ und $R_2$ zusammen eine $C_{4-7}$-Alkylengruppe, so kommen z. B. Tetramethylen-, Pentamethylen-, Hexamethylen- oder Heptamethylengruppen in Betracht. Alkylgruppen $R_3$ können geradkettig oder verzweigt sein und sind z. B. Methyl-, Äthyl-, n-Propyl-, Isopropyl-, n-Butyl-, sek.-Butyl-, Amyl- oder Hexylgruppen. Beispiele von Cycloalkylgruppen $R_3$ sind die Cyclopropyl-, Cyclobutyl-, Cyclopentyl-, Cyclohexyl-, Cycloheptyl- oder Cyclooctylgruppe. Bedeutet $R_3$ eine Arylgruppe, so handelt es sich z. B. um eine Phenyl- oder Naphthylgruppe.

Beispiele von Salzen von Verbindungen der Formel I sind Hydrochloride, Sulfate, Nitrate, Phosphate, Methansulfonate, Methanphosphonate, p-Toluolsulfonate, Acetate, Benzoate, Oxalate, Succinate und Maleate.

Bevorzugt sind Verbindungen der Formel I, worin p 1 ist; besonders bevorzugt sind Verbindungen der Formel I, worin p 1 ist, X $-NH_2$ darstellt und Y und $-QNH_2$ die oben angegebene Bedeutung haben. Ganz besonders bevorzugt sind Verbindungen der Formel I, worin p 1 ist, X $-NH_2$ bedeutet, Y die oben angegebene Bedeutung hat, worin $R_4$ und $R_5$ Wasserstoff oder $C_{1-3}$-Alkyl, besonders Methyl und vor allem Wasserstoff sind, und $-QNH_2$ die oben angegebene Bedeutung hat, worin n 1 bis 15, besonders 3, 8 oder 9 ist, $R_1$ $C_{1-6}$-Alkyl, besonders $C_{1-4}$-Alkyl, vor allem Methyl oder Äthyl, $R_2$ $C_{1-3}$-Alkyl, besonders Methyl oder Äthyl, vor allem Methyl, und $R_3$ $C_{1-6}$-Alkyl, besonders $C_{1-4}$-Alkyl und vor allem Methyl oder Isopropyl bedeuten.

Als Beispiele von Verbindungen der Formel I seien genannt:

2-Amino-6-(4-aminocyclohexyl)-6-methylheptan,
2-Amino-6-(4-amino-3-methylcyclohexyl)-6-methylheptan,
2-Amino-6-(4-amino-3,5-dimethylcyclohexyl)-6-methylheptan,

2-Amino-6-(4-amino-3-äthylcyclohexyl)-6-methylheptan,
2-Amino-6-(4-amino-3,5-diäthylcyclohexyl)-6-methylheptan,
2-Amino-6-(4-amino-3-isopropylcyclohexyl)-6-methylheptan,
2-Amino-6-(4-amino-3,5-diisopropylcyclohexyl)-6-methylheptan,
2-Amino-6-(4-amino-3-sek.-butylcyclohexyl)-6-methylheptan,
2-Amino-6-(4-amino-3,5-di-sek.-butylcyclohexyl)-6-methylheptan,
3-Amino-12-(4-aminocyclohexyl)-2,12-dimethyl-tetradecan,
3-Amino-13-(4-aminocyclohexyl)-2,13-dimethyl-tetradecan,
2-Amino-6-(4-amino-3-methyl-5-äthylcyclohexyl)-6-methylheptan,
2-Amino-6-(4-amino-3-methyl-5-isopropylcyclohexyl)-6-methylheptan,
2-Amino-6-(4-amino-3-methyl-5-sek.-butylcyclohexyl)-6-methylheptan,
2-Amino-6-(4-amino-3-ethyl-5-sek.-butylcyclohexyl)-6-methylheptan,
3-Amino-12-(4-amino-3-methylcyclohexyl)-2,12-dimethyl-tetradecan,
3-Amino-13-(4-amino-3-methylcyclohexyl)-2,13-dimethyl-tetradecan,
3-Amino-12-(4-amino-3,5-dimethylcyclohexyl)-2,12-dimethyl-tetradecan,
3-Amino-13-(4-amino-3,5-dimethylcyclohexyl)-2,13-dimethyl-tetradecan,
3-Amino-12-(4-amino-3-äthylcyclohexyl)-2,12-dimethyl-tetradecan,
3-Amino-13-(4-amino-3-äthylcyclohexyl)-2,13-dimethyl-tetradecan,
3-Amino-12-(4-amino-3-isopropylcyclohexyl)-2,12-dimethyl-tetradecan,
3-Amino-13-(4-amino-3-isopropylcyclohexyl)-2,13-dimethyl-tetradecan,
3-Amino-12-(4-amino-3-methyl-5-isopropylcyclohexyl)-2,12-dimethyl-tetradecan,
3-Amino-13-(4-amino-3-methyl-5-isopropylcyclohexyl)-2,13-dimethyl-tetradecan,
1-Amino-10-(4-amino-cyclohexyl)-10-methyl-cyclohexyldecan,
3-Amino-12-(4-amino-cyclohexyl)-12-methyl-tetradecan,
3-Amino-13-(4-amino-cyclohexyl)-13-methyl-tetradecan,
1-(4-Aminocyclohexyl)-1-(3-amino-dodec-12-yl)-cyclohexan,
1,4-Bis-(6-amino-2-methylhept-2-yl)cyclohexan,
4,4''-Bis-(6-amino-2-methylhept-2-yl)-bicyclohexyl,
1,4-Bis-(12-amino-3,13-dimethyltetradec-3-yl)cyclohexan,
1,4-Bis-(12-amino-2,13-dimethyltetradec-2-yl)-cyclohexan,
1-(12-Amino-3,13-dimethyltetradec-3-yl)-4-(12-amino-2,13-dimethyl-tetradec-2-yl)-cyclohexan,
4,4'-Bis-(6-amino-2-methylhept-2-yl)-dicyclohexylmethane,
4,4'-Bis-(6-amino-2-methylhept-2-yl)-dicyclohexyläther,
2,6-Bis-(6-amino-2-methylhept-2-yl)-decalin,
2,7-Bis-(6-amino-2-methylhept-2-yl)-decalin.

Bevorzugte Verbindungen der Formel I sind:

cis-2-Amino-6-(4-aminocyclohexyl)-6-methylheptan,
trans-2-Amino-6-(4-aminocyclohexyl)-6-methylheptan,
cis- und trans-3-Amino-12-(4-aminocyclohexyl)-2,13-dimethyl-tetradecan,
cis- und trans-3-Amino-13-(4-aminocyclohexyl)-2,13-dimethyl-tetradecan,
2-Amino-6-(4-amino-3-methylcyclohexyl)-6-methylheptan,
2-Amino-6-(4-amino-3,5-dimethylcyclohexyl)-6-methylheptan,
2-Amino-6-(4-amino-3-äthylcyclohexyl)-6-methylheptan,
2-Amino-6-(4-amino-3-isopropylcyclohexyl)-6-methylheptan,
4,4'-Bis-(6-amino-2-methylhept-2-yl)-bicyclohexyl.

Die Erfindung betrifft auch ein Verfahren zur Herstellung von Verbindungen der Formel I sowie deren Salze mit organischen oder anorganischen Säuren und Stereoisomere von Verbindungen der Formel I, indem man eine Verbindung der Formel IIIa oder IIIb

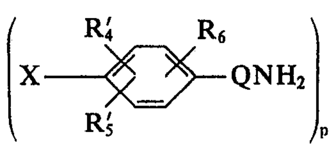

(IIIa)

oder

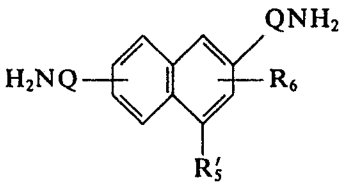

(IIIb)

oder ein Salz davon mit einer organischen oder anorganischen Säure in Gegenwart eines Metall- oder gemischten Metallkatalysators und in Gegenwart eines unter den Reaktionsbedingungen gegen Wasserstoff inerten Lösungsmittels hydriert, wobei $-QNH_2$ und p die oben angegebene Bedeutung haben und, wenn p 1 ist, $X-NH_2$ oder $-QNH_2$ und, wenn p 2 ist, X die direkte Bindung, $-CH_2-$ oder $-O-$ ist, $R_4'$ und und $R_5'$ unabhängig voneinander Wasserstoff, $C_{1-4}$-Alkyl oder Chlor und $R_6$ Wasserstoff oder Chlor bedeuten, mit der Maßgabe, daß nur eines von $R_4'$, $R_5'$ und $R_6$ Chlor ist. Bei der Reduktion der Verbindungen der Formel IIIa oder IIIb, worin eines von $R_4'$, $R_5'$ oder $R_6$ Chlor ist wird dieses Chloratom durch ein Wasserstoffatom ersetzt.

Verbindungen der Formel IIIa, worin p 1 ist und $X-NH_2$ bedeutet, können durch Umsetzung entsprechender aromatischer Amine mit entsprechenden Alkylierungsmitteln in wäßrigem saurem Medium, das mindestens 30 Gewichtsprozent Wasser enthält, oder durch Umsetzung bei Normaldruck (Atmosphärendruck) und Temperaturen zwischen 100 und 200°C, bevorzugt 170 bis 190°C, hergestellt werden. Diese Temperatur kann beim Arbeiten unter Normaldruck dadurch erreicht werden, daß man das vorhandene Wasser destillativ entfernt.

Verbindungen der Formel IIIa, worin p 1 oder 2 und $X-QNH_2$ sind, sowie Verbindungen der Formel IIIb können dadurch hergestellt werden, daß man bei Temperaturen von 0—150°C in Gegenwart eines Friedel-Crafts-Katalysator eine Verbindung der Formel IV

$$R_7Z_x \qquad (IV)$$

worin $R_7$ ein ein- oder mehrwertiger $C_6$—$C_{20}$-aromatischer Rest, Z ein ersetzbares H-Atom und $x = 1$ oder 2 ist, mit einem als Alkylierungsmittel dienenden Aminoalkohol oder Aminoolefin oder einem Salz davon mit einer organischen oder anorganischen Säure, umsetzt, so daß ein H-Atom in IV durch eine Gruppe der Formel II ersetzt wird.

Als Lösungsmittel können im erfindungsgemäßen Verfahren z. B. Alkohole, Carbonsäuren oder wäßrige anorganische Säuren verwendet werden. Essigsäure und Chlorwasserstoffsäure sind besonders geeignet. Bei Verwendung von wäßriger Chlorwasserstoffsäure wird pro Aminogruppe 1 Äquivalent HCl eingesetzt; es können aber auch bis zu 2 Äquivalente Überschuß über die für die Neutralisation benötigte Menge vorhanden sein.

Werden Lösungsmittel wie tert.-Butanol verwendet, so können höhere Temperaturen, z.B. bis zu 160°C, angewandt werden. Bei Verwendung von Chlorwasserstoffsäure oder Essigsäure wird die Hydrierung hingegen zweckmäßig bei Raumtemperatur durchgeführt.

Der Druck kann zwischen Normaldruck (Atmosphärendruck) und 200 Atmosphären liegen; ein Druck zwischen 1 und 5 Atmosphären ist ganz besonders geeignet, wenn Chlorwasserstoffsäure als Lösungsmittel verwendet wird.

Als Hydrierungskatalysatoren eignen sich Metalle der Gruppe VIII des Periodischen Systems, z. B. Rh und Pt, oder Gemische davon, die noch andere Metalle, z. B. Al, enthalten können, oder deren Oxide. Wenn tert.-Butanol als Lösungsmittel eingesetzt wird, ist $Rh/Al_2O_3$ bevorzugt. Bei der Verwendung von Chlorwasserstoffsäure als Lösungsmittel wird ein Gemisch $Rh_2O_3-PtO_2$ [(Nishimura-Katalysator; Shigeo Nishimura und Hisaaki Taguchi, Bull. Soc. Chem., Japan, 36 (7), 873—5 (1963)] bevorzugt.

Die die reduzierten Verbindungen der Formel I enthaltenden Lösungen können durch Filtration vom Katalysator getrennt werden. Organische Lösungsmittel können abgezogen werden, worauf man die Verbindungen der Formel I durch Destillation unter vermindertem Druck isolieren kann. Wird die Hydrierung unter Verwendung von Chlorwasserstoffsäure als Lösungsmittel durchgeführt, so kann das filtrierte Reaktionsgemisch mit einer Base, wie Natriumhydroxid, neutralisiert und dann isoliert werden, z.B. mittels Extraktion mit Diäthyläther und anschließender Destillation.

Als Beispiele von Verbindungen der Formel IIIa und IIIb seien genannt:

2-Amino-6-(4-aminophenyl)-6-methylheptan,
1-Amino-11-(4-aminophenyl-2,11-dimethyldodecan,
3-Amino-12-(4-aminophenyl)-2,12-dimethyltetradecan,
2-Amino-6-(4-aminophenyl)-6-methylheptan,
1-Amino-11-(4-aminophenyl)-2,11-diemethyldodecan,
3-Amino-12-(4-aminophenyl)-2,12-dimethyl-tetradecan,
3-Amino-13-(4-aminophenyl)-2,13-dimethyltetradecan,
2-Amino-6-(4-amino-3-methylphenyl)-6-methylheptan,
2-Amino-6-(4-amino-3,5-dimethylphenyl)-6-methylheptan,
2-Amino-6-(4-amino-3-äthylphenyl)-6-methylheptan,
2-Amino-6-(4-amino-3,5-diäthylphenyl)-6-methylheptan,
2-Amino-6-(4-amino-3-isopropylphenyl)-6-methylheptan,
2-Amino-6-(4-amino-3,5-diisopropylphenyl)-6-methylheptan,
2-Amino-6-(4-amino-3-sek.-butylphenyl)-6-methylheptan,
2-Amino-6-(4-amino-3,5-di-sek.-butylphenyl)-6-methylheptan,
2-Amino-6-(4-amino-3-methyl-5-äthylphenyl)-6-methylheptan,
2-Amino-6-(4-amino-3-methyl-5-isopropylphenyl)-6-methylheptan,

2-Amino-6-(4-amino-3-methyl-5-sek.-butylphenyl)-6-methylheptan,
2-Amino-6-(4-amino-3-äthyl-5-sek.-butylphenyl)-6-methylheptan,
2-Amino-6-(4-amino-3-chlorphenyl)-6-methylheptan,
2-Amino-6-(4-amino-3,5-dichlorphenyl)-6-methylheptan,
2-Amino-6-(4-amino-3-chlor-5-methylphenyl)-6-methylheptan,
3-Amino-12-(4-amino-3-methylphenyl)-2,12-dimethyl-tetradecan,
3-Amino-13-(4-amino-3-methylphenyl)-2,13-dimethyl-tetradecan,
3-Amino-12-(4-amino-3,5-dimethylphenyl)-2,12-dimethyl-tetradecan,
3-Amino-13-(4-amino-3,5-dimethylphenyl)-2,13-dimethyl-tetradecan,
3-Amino-13-(4-amino-3-äthylphenyl)-2,13-dimethyl-tetradecan,
3-Amino-13-(4-amino-3-äthylphenyl)-2,13-dimethyl-tetradecan,
3-Amino-12-(4-amino-3-isopropylphenyl)-2,12-dimethyl-tetradecan,
3-Amino-13-(4-amino-3-isopropylphenyl)-2,13-dimethyl-tetradecan,
3-Amino-12-(4-amino-3-methyl-5-isopropylphenyl)-2,12-dimethyl-tetradecan,
3-Amino-13-(4-amino-3-methyl-5-isopropylphenyl)-2,13-dimethyl-tetradecan,
1-Amino-10-(4-aminophenyl)-10-methyl-1-phenyl-decan,
3-Amino-12-(4-aminophenyl)-12-methyl-tetradecan,
3-Amino-13-(4-aminophenyl)-13-methyl-tetradecan,
1-(4-Aminophenyl)-1-(3-amino-dodec-12-yl)-cyclohexan,
1,4-Bis-(6-amino-2-methylhept-2-yl)-benzol,
4,4'-Bis-(6-amino-2-methylhept-2-yl)-diphenyl),
1,4-Bis-(12-amino-3,13-dimethyltetradec-3-yl)-benzol,
1,4-Bis-(12-amino-2,13-dimethyltetradec-2-yl)-benzol,
1-(12-Amino-3,13-dimethyltetradec-3-yl)-4-(12-amino-2,13-dimethyltetradec-2-yl)-benzol,
4,4'-Bis-(6-amino-2-methylhept-2-yl)-diphenylmethan,
4,4'-Bis-(6-amino-2-methylhept-2-yl)-diphenyläther,
2,6-Bis-(6-amino-2-methylhept-2-yl)-naphthalin,
2,7-Bis-(6-amino-2-methylhept-2-yl)-naphthalin,
4-(5-Amino-2-methylhept-2-yl)-4'-(12-amino-2,13-dimethyltetradec-2-yl)-diphenyläther.

Die nach dem erfindungsgemäßen Verfahren hergestellten Verbindungen der Formel I können als ein oder mehrere Stereoisomere vorliegen, wobei deren Zahl von der Art der Substituenten $R_4$, $R_5$ und $-QNH_2$ abhängt. Wenn z. B. p 1 ist, $X-NH_2$, $R_4$ und $R_5$ Wasserstoff und $-QNH_2$ Aminoalkyl darstellen, können zwei Isomere, nämlich das cis- und trans-Isomere, der Formeln IV und V entstehen:

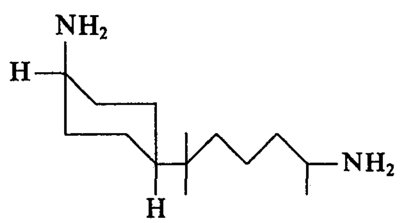

(IV)

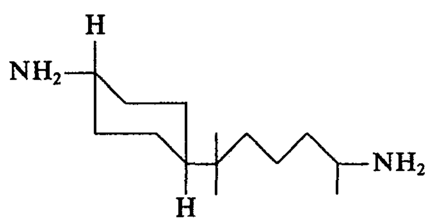

(V)

Beispiele von solchen Stereoisomeren sind:

cis-2-Amino-6-(4-aminocyclohexyl)-6-methylheptan,
trans-2-Amino-6-(4-amino-cyclohexyl)-6-methylheptan,
cis- und trans-1-Amino-11-(4-aminocyclohexyl)-2,11-dimethyldodecan,
cis- und trans-3-Amino-2,12-dimethyl-12-(4-aminocyclohexyl)-tetradecan,
cis- und trans-3-Amino-2,13-dimethyl-13-(4-aminocyclohexyl)-tetradecan.

Die Verbindungen der Formel I sind wertvolle Zwischenprodukte für andere Verbindungen, z. B. zur Herstellung von neuen transparenten Polyamiden, die sich durch eine verbesserte thermoplastische Verarbeitbarkeit, gute Kochbeständigkeit und niedrige Wasseraufnahme, hohe Hydrolysebeständigkeit, gute Dimensionsstabilität unter dem Einfluß von Feuchtigkeit und entsprechend verbesserte mechanische und elektrische Eigenschaften auszeichnen.

Die neuen Polyamide haben eine reduzierte spezifische Viskosität von mindestens 0,3 dl/g, vorzugsweise etwa 0,5 bis etwa 2,0 dl/g und insbesondere etwa 0,7 bis etwa 1,8 dl/g, gemessen an einer 0,5 %igen Lösung in m-Kresol bei 25°C und bestehen aus wiederkehrenden Strukturelementen der Formel VI

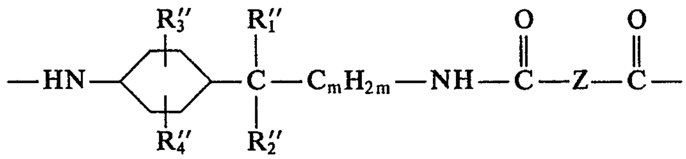 (VI)

worin m eine ganze Zahl von 4 bis 16, $R_1''$ $C_{1-3}$-Alkyl, $R_2''$ $C_{1-6}$-Alkyl, $R_3''$ und $R_4''$ unabhängig voneinander Wasserstoff oder $C_{1-3}$-Alkyl, und Z 1,3- und/oder 1,4-Phenylen darstellen, das in bis zu 50 Mol.-%, bevorzugt bis zu 45 Mol.-%, der Strukturelemente der Formel VI durch Gruppen $-(CH_2)_k-$ ersetzt sein kann, worin k eine ganze Zahl von 4 bis 10 darstellt und wobei die Carbonylgruppen in den Strukturelementen der Formel VI in 1,3- und/oder 1,4-Stellung an den Benzolring gebunden sind.

In den folgenden Beispielen bedeuten Teile und Prozente Gewichtsteile bzw. Gewichtsprozente. Die Temperaturen sind in °C angegeben.

## Beispiel 1

A) 5,0 Teile 2-Amino-6-(4-aminophenyl)-6-methylheptan, gelöst in 68 Teilen 1 N wäßriger Chlorwasserstoffsäure, werden bei Raumtemperatur und Atmosphärendruck in Gegenwart von 0,5 Teilen Nishimura-Katalysator (Rhodium-Platin-Oxide) mit Wasserstoff geschüttelt. Die Wasserstoffaufnahme ist bei 105 % d. Th. beendet. Die Lösung wird durch Filtrieren vom Katalysator befreit und mit Natriumhydroxidlösung behandelt. Dabei entsteht ein Öl, das mit Diäthyläther isoliert wird. Nach dem Entfernen des Diäthyläthers wird der Rückstand destilliert. Man erhält 4,0 Teile cis- und trans-2-Amino-6-(4-aminocyclohexyl)-6-methylheptan, Sdp. (0,3 mbar) 120—129°, mit der folgenden Zusammensetzung in %:

| | | | |
|---|---|---|---|
| gefunden | C 74,62 | H 13,52 | N 12,54 |
| berechnet für $C_{14}H_{30}N_2$ | C 74,27 | H 13,36 | N 12,37. |

B) Das 2-Amino-6-(4-aminophenyl)-6-methylheptan-Ausgangsprodukt wird wie folgt hergestellt: Zu einer Lösung von 102 Teilen wasserfreiem Zinkchlorid in 153 Teilen 36 %iger wäßriger Chlorwasserstoffsäure und 200 Teilen Wasser werden 140 Teile Anilin und 136 Teile 6-Hydroxy-6-methyl-2-heptylamin-Hydrochlorid (Heptaminol-Hydrochlorid) gegeben. Das Reaktionsgemisch wird in einen mit Tantal ausgekleideten 1-Liter Autoklaven eingefüllt und während 24 Stunden bei 185° gerührt. Nach dem Entfernen aus dem Autoklaven wird das Reaktionsgemisch zu einer heißen Lösung von 750 Teilen Natriumhydroxid in 1500 Teilen Wasser gegeben und bis zum Abkühlen gerührt. Die organische Phase wird mit Diäthyläther extrahiert, mit Wasser gewaschen, verdampft und unter vermindertem Druck destilliert. Nach der Rückgewinnung von 58 Teilen Anilin erhält man 135 Teile 2-Amino-6-(4-aminophenyl)-6-methylheptan, Sdp. (0,7 mbar) 138—140°. (82 % d. Th., bezogen auf das Heptaminol), mit der folgenden Zusammensetzung in %:

| | | | |
|---|---|---|---|
| gefunden | C 76,36 | H 11,27 | N 13,01 |
| berechnet für $C_{14}H_{24}N_2$ | C 76,31 | H 10,98 | N 12,71. |

## Beispiel 2

5,1 Teile 2-Amino-6-(4-amino-3-chlorphenyl)-6-methylheptan werden nach der in Beispiel 1 beschriebenen Vorgehen hydriert und aufgearbeitet, unter Verwendung von 60 Teilen 1 N wäßriger Chlorwasserstoffsäure und 1,0 Teil Nishimura-Katalysator. Die Hydrierung ist nach 48 Stunden beendet, was einer Wasserstoffaufnahme von 126 % der Theorie entspricht. Nach der Destillation erhält man 4,0 Teile cis- und trans-2-Amino-6-(4-aminocyclohexyl)-6-methylheptan; Sdp. (16 mbar) 160—165°. Gemäß spektroskopischer Analyse beträgt das Verhältnis von cis- zu trans-Isomeren 3 : 1 Teile.

Das 2-Amino-6-(4-amino-3-chlorphenyl)-6-methylheptan wird auf analoge Weise wie in Beispiel 1 (B) beschrieben hergestellt, wobei anstelle von Anilin 2-Chloranilin verwendet wird; Sdp. (13 mbar) 192—197°. Molekularformel $C_{14}H_{23}ClN_2$; Elementaranalyse in %:

| | | | |
|---|---|---|---|
| gefunden | C 66,15 | H 9,43 | N 12,70 |
| berechnet | C 65,99 | H 9,10 | N 10,99. |

## Beispiel 3

Aus 2-Amino-6-(4-amino-3-methylphenyl)-6-methylheptan wird nach der in Beispiel 1 beschriebenen Arbeitsweise durch Hydrierung mit einem Nishimura-Katalysator 2-Amino-6-(4-amino-3-methylcyclohexyl)-6-methylheptan (Sdp. bei 16 mbar = 170—2°) hergestellt, das die folgende Zusammensetzung in % aufweist:

| | | | |
|---|---|---|---|
| gefunden | C 75,03 | H 13,26 | N 11,33 |
| berechnet für $C_{15}H_{32}N_2$ | C 74,93 | H 13,42 | N 11,65. |

Auf analoge Weise, wie in Beispiel 1 (B) beschrieben, wird, ausgehend von o-Toluidin anstelle von Anilin, das 2-Amino-6-(4-amino-3-methylphenyl)-6-methylheptan hergestellt; Sdp. (13 mbar) 192—196°. Molekularformel $C_{15}H_{26}N_2$; Elementaranalyse in %.

| | | | |
|---|---|---|---|
| gefunden | C 76,87 | H 11,18 | N 11,95 |
| berechnet | C 76,56 | H 11,49 | N 12,25. |

Beispiel 4

Methode A

Nach der Arbeitsweise gemäß Beispiel 1 wird aus 2-Amino-6-(4-amino-3,5-dimethylphenyl)-6-methylheptan durch Hydrierung mit einem Nishimura-Katalysator 2-Amino-6-(4-amino-3,5-dimethylcyclohexyl)-6-methylheptan hergestellt; Sdp. (16 mbar) 170—172°. Zusammensetzung in %:

| | | | |
|---|---|---|---|
| gefunden | C 74,77 | H 14,36 | N 11,48 |
| berechnet für $C_{16}H_{34}N_2$ | C 75,52 | H 13,47 | N 11,01. |

Methode B

10 Teile 2-Amino-6-(4-amino-3,5-dimethylphenyl)-6-methylheptan, 90 Teile Eisessig, 8,2 Teilen 36 %ige wäßrige Chlorwasserstoffsäure und 1,0 Teil Nishimura-Katalysator werden in eine Druckapparatur aus Glas eingefüllt. Das Gemisch wird bei 80°C und einem Druck von 4 bar mit Wasserstoff geschüttelt. Die Wasserstoffaufnahme ist nach 1,25 Stunden bei 100% der Theorie beendet. Nach dem Abfiltrieren des Katalysators wird die Lösung in 200 Teile Eis gegossen, und der pH-Wert der Lösung wird dann auf 13 eingestellt. Die organische Phase wird mit Diäthyläther extrahiert, verdampft und destilliert. Man erhält 1,5 Teile eines Verlaufs, gefolgt von 5,4 Teilen 2-Amino-6-(4-amino-3,5-dimethylcyclohexyl)-6-methylheptan (0,05 mbar) 84—87°, mit der folgenden Zusammensetzung in %:

| | | | |
|---|---|---|---|
| gefunden | C 75,2 | H 13,5 | N 10,9 |
| berechnet für $C_{16}H_{34}N_2$ | C 75,52 | H 13,47 | N 11,01. |

Methode C

58 Teile 2-Amino-6-(4-amino-2,3-dimethyl)-6-methylheptan, 640 Teile tert.-Butanol und 12 Teile eines 5 %igen $Rh/Al_2O_3$-Katalysators werden bei einem Druck von 200 bar in einem Autoklaven mit Wasserstoff erhitzt. Nach 15 Stunden ist die Wasserstoffaufnahme beendet, und das Reaktionsgemisch wird durch Filtrieren vom Katalysator befreit. Nach dem Entfernen des tert.-Butanols wird das Filter destilliert. Man erhält 47 Teile 2-Amino-6-(4-amino-2,3-dimethylcyclohexyl)-6-methylheptan; Sdp. (0,2 mbar) 116—8°.

Auf analoge Weise, wie in Beispiel 1 (B) beschrieben, wird unter Verwendung von 2,6-Dimethylanilin anstelle von Anilin das 2-Amino-6-(4-amino-3,5-dimethylphenyl)-6-methylheptan erhalten; Sdp. (0,07 mbar) 126—130°. Molekularformel $C_{16}H_{28}N_2$; Elementaranalyse in %:

| | | | |
|---|---|---|---|
| gefunden | C 77,11 | H 11,06 | N 11,28 |
| berechnet | C 77,36 | H 11,36 | N 11,28. |

Beispiel 5

10,0 Teile 2-Amino-6-(4-amino-3-äthylphenyl)-6-methylheptan in 120 Teilen 1 N wäßriger Chlorwasserstoffsäure werden bei Raumtemperatur und Normaldruck in Gegenwart von 1,0 Teil Nishimura-Katalysator mit Wasserstoff geschüttelt. Nach 18 Stunden beträgt die Wasserstoffaufnahme 46 % der Theorie.

Man gibt nochmals 1,0 Teil Katalysator zu, wobei nach 15 Stunden eine Wasserstoffaufnahme von 96 % der Theorie erreicht wird. Schließlich wird nochmals 1,0 Teil Katalysator zugegeben und nach

24 Stunden ist die Hydrierung bei einer Wasserstoffaufnahme von 110% der Theorie beendet. Das Reaktionsprodukt wird gemäß Beispiel 1 aufgearbeitet. Nach der Destillation erhält man 8,8 Teile 2-Amino-6-(4-amino-3-äthylcyclohexyl)-6-methylheptan Sdp. (12 mbar) 176—180°, mit der folgenden Zusammensetzung in %:

| | | | |
|---|---|---|---|
| gefunden | C 75,38 | H 13,74 | N 11,11 |
| berechnet für $C_{16}H_{34}N_2$ | C 75,52 | H 13,47 | N 11,01. |

Das 2-Amino-6-(4-amino-3-äthylphenyl)-6-methylheptan (Sdp. bei 13 mbar = 188—194°) wird auf analoge Weise wie in Beispiel 1 (B) beschrieben erhalten, unter Verwendung von 2-Äthylanilin anstelle von Anilin. Molekularformel $C_{16}H_{28}N_2$; Elementaranalyse in %:

| | | | |
|---|---|---|---|
| gefunden | C 77,36 | H 11,78 | N 10,96 |
| berechnet | C 77,36 | H 11,36 | N 11,28. |

Beispiel 6

5,2 Teile 2-Amino-6-(4-amino-3-isopropylphenyl)-6-methylheptan in 61 Teilen 1 N wäßriger Chlorwasserstoffsäure werden bei Raumtemperatur und Normaldruck unter Verwendung von 1,0 Teil Nishimura-Katalysator hydriert. Nach 7 Stunden werden noch 1,0 Teil und nach 24 Stunden noch 0,5 Teile Katalysator zugegeben. Die Hydrierung ist nach 46 Stunden mit einer Wasserstoffaufnahme von 103% der Theorie beendet. Die Aufarbeitung erfolgt wie in Beispiel 1 und gibt nach der Destillation 4,2 Teile 2-Amino-6-(4-amino-3-isopropylcyclohexyl)-6-methylheptan Sdp. (12 mbar) 182—184°, mit der folgenden Zusammensetzung in %:

| | | | |
|---|---|---|---|
| gefunden | C 75,98 | H 13,65 | N 10,15 |
| berechnet für $C_{17}H_{36}N_2$ | C 76,05 | H 13,52 | N 10,43. |

Unter Verwendung von 2-Isopropylanilin anstelle von Anilin wird nach der in Beispiel 1 (B) beschriebenen Arbeitsweise 2-Amino-6-(4-amino-3-isopropylphenyl)-6-methylheptan hergestellt; Sdp. (16 mbar) 190—198°. Molekularformel $C_{17}H_{30}N_2$; Elementaranalyse in %:

| | | | |
|---|---|---|---|
| gefunden | C 78,07 | H 11,76 | N 10,67 |
| berechnet | C 77,80 | H 11,52 | N 10,67. |

Beispiel 7

5,0 Teile eines Gemisches aus 3-Amino-12-(4-aminophenyl)-2,12-dimethyl-tetradecan und 3-Amino-13-(4-aminophenyl)-2,13-dimethyl-tetradecan in 60 ml 1 N wäßriger Chlorwasserstoffsäure werden bei Raumtemperatur und Normaldruck in Gegenwart von 1,0 Teil Nishimura-Katalysator mit Wasserstoff geschüttelt. Nach Beendigung der Wasserstoffaufnahme bei 118% der Theorie wird die Lösung mit Ätznatron alkalisch gestellt. Die Aufarbeitung nach Extraktion mit Diäthyläther, Filtrieren und Kurzweg-Destillation ergibt 3,4 Teile 3-Amino-12-(4-aminocyclohexyl)-2,12-dimethyl-tetradecan und 3-Amino-13-(4-aminocyclohexyl)-2,13-dimethyl-tetradecan; Sdp. (0,3 mbar) 190°.

Das Ausgangsprodukt, d.h. das Gemisch aus 3-Amino-12-(4-aminophenyl)-2,12-dimethyl-tetradecan und 3-Amino-13-(4-aminophenyl)-2,13-dimethyl-tetradecan wird wie folgt hergestellt: 123 Teile Anilin und 84 Teile 11-Amino-2,2,12-trimethyltridecan-1-ol werden in einer Lösung von 166 Teilen 36%iger wäßriger Chlorwasserstoffsäure, 89 Teilen wasserfreiem Zinkchlorid und 130 Teilen Wasser gelöst. Diese Lösung wird 90 Stunden bei 180° in einem 1-Liter Tantalautoklaven gerührt; dann wird das Reaktionsgemisch in 250 Teile Natriumhydroxid in 500 Teilen Wasser gegossen und wie in Beispiel 1 beschrieben aufgearbeitet. Die Destillation unter vermindertem Druck ergibt 85 Teile einer ersten Fraktion, die zur Hauptsache aus Anilin besteht. Danach erhält man ein Gemisch von 62 Teilen 3-Amino-12-(4-aminophenyl)-2,12-dimethyl-tetradecan und 3-Amino-13-(4-aminophenyl)-2,13-dimethyltetradecan Sdp. (0,13 mbar) 184—188° (57% d.Th., bezogen auf das Aminotridecanol), mit der folgenden Zusammensetzung in %:

| | | | |
|---|---|---|---|
| gefunden | C 79,19 | H 12,40 | N 8,46 |
| berechnet für $C_{22}H_{40}N_2$ | C 79,45 | H 12,12 | N 8,43. |

Beispiel 8

5,66 g (0,025 Mol) der Verbindung gemäß Beispiel 1 (A) [2-Amino-6-(4-aminocyclohexyl)-6-methylheptan] und 4,155 g (0,025 Mol) Isophthalsäure werden in ein Bombenrohr, das mit Schraubdeckel und eingebautem Überdruckventil versehen ist, eingewogen. Nachdem man die Luft im Bombenrohr vollständig durch Stickstoff verdrängt hat, verschließt man das Bombenrohr und taucht es in ein Salzbad von 270° ein. Nach kurzer Zeit ist eine klare Schmelze entstanden. Nach zwei Stunden wird die Reaktion abgebrochen, indem man das Rohr aus dem Salzbad entfernt und den Überdruck durch Öffnen des Ventils abläßt. Das erstarrte Vorkondensat wird aus dem Bombenrohr entfernt und in ein Kondensationsgefäß übergeführt. Unter strengem Ausschluß von Luft und dauerndem Durchleiten von Stickstoff bei einer Temperatur von 280° wird die wieder aufgeschmolzene Masse polykondensiert, wobei das gebildete Wasser durch den Stickstoffstrom laufend entfernt wird. Nach 5 Stunden wird die Polykondensation abgebrochen. Beim Abkühlen erstarrt die Schmelze zu einer glasklaren, farblosen Masse.

2—3 g des so hergestellten Polyamids werden mittels einer beheizbaren hydraulischen Presse zu einer Folie von ca. 0,3 bis 0,5 mm Dicke verpreßt. Zur Bestimmung der Wasseraufnahme wird die Folie bei Raumtemperatur einer relativen Luftfeuchtigkeit von 65 % ausgesetzt, bis keine Gewichtszunahme mehr festgestellt werden kann; (Wasseraufnahme = 2—3 Gew.-%). Die reduzierte Lösungsviskosität des erhaltenen Polyamids, gemessen an einer 0,5 %igen Lösung in m-Kresol bei 25°, beträgt 1,39 dl/g. Die Glasumwandlungstemperatur Tg wird im Differentialkalorimeter (DSC) bestimmt und beträgt 174°.

## Patentansprüche

1. Verbindungen der Formel I

$$X{-}\!\!(YQNH_2)_p \qquad \text{(I)}$$

worin p 1 oder 2 ist und die Reste $-QNH_2$ gleiche oder verschiedene Reste der Formel II

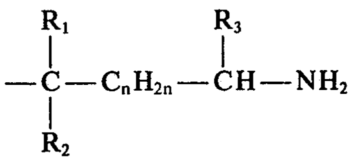

(II)

bedeuten, worin n eine ganze Zahl von 1—15, $R_1$ $C_{1-8}$-Alkyl, $R_2$ $C_{1-4}$-Alkyl oder $R_1$ und $R_2$ zusammen eine $C_{4-7}$-Alkylengruppe, $R_3$ Wasserstoff, $C_{1-6}$-Alkyl, $C_{3-8}$-Cycloalkyl oder $C_{6-10}$-Aryl und Y einen zweiwertigen Rest der Formel

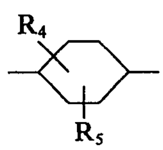

darstellen, worin $R_4$ und $R_5$ Wasserstoff oder $C_{1-4}$-Alkyl bedeuten oder, wenn p 1 ist, die Gruppe $R_4$ zusammen mit der Gruppe X eine durch die Gruppe $-QNH_2$ substituierte Tetramethylenkette darstellen kann, X $-NH_2$ oder $QNH_2$ ist oder wie oben definiert mit der Gruppe $R_4$ kombiniert sein kann, und, wenn p 2 ist, X die direkte Bindung, $-CH_2-$ oder $-O-$ darstellt, sowie Salze von Verbindungen der Formel I mit organischen oder anorganischen Säuren und Stereoisomere von Verbindungen der Formel I.

2. Verbindungen der Formel I nach Anspruch 1, worin p 1 ist.

3. Verbindungen der Formel I nach Anspruch 1 oder 2, worin p 1 ist und X $-NH_2$ darstellt.

4. Verbindungen der Formel I nach Anspruch 3, worin p 1 ist, X $-NH_2$ bedeutet, $R_4$ und $R_5$ Wasserstoff oder $C_{1-3}$-Alkyl, $R_1$ $C_{1-6}$-Alkyl, $R_2$ $C_{1-3}$-Alkyl und $R_3$ $C_{1-6}$-Alkyl darstellen.

5. Verbindungen der Formel I nach Anspruch 4, worin $R_4$ und $R_5$ Methyl oder Wasserstoff, n 3, 8 oder 9, $R_1$ $C_{1-4}$-Alkyl, $R_2$ Methyl oder Äthyl und $R_3$ $C_{1-4}$-Alkyl bedeuten.

6. Verbindungen der Formel I nach Anspruch 5, worin $R_1$ Methyl oder Äthyl, $R_2$ Methyl, $R_3$ Methyl oder Isopropyl und $R_4$ und $R_5$ Wasserstoff bedeuten.

7. Verfahren zur Herstellung von Verbindungen der Formel I, deren Salze mit organischen oder anorganischen Säuren sowie deren Stereoisomere nach Anspruch 1, dadurch gekennzeichnet, daß man eine Verbindung der Formel III a oder III b

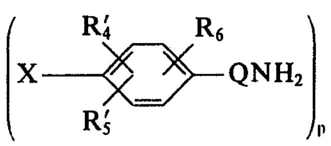

(IIIa)

oder

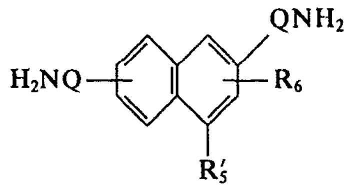

(IIIb)

oder ein Salz davon mit einer organischen oder anorganischen Säure in Gegenwart eines Metall- oder gemischten Metall-Katalysators und in Gegenwart eines unter den Reaktionsbedingungen gegenüber Wasserstoff inerten Lösungsmittels hydriert, wobei $-QNH_2$ und p die im Anspruch 1 angegebene Bedeutung haben, und, wenn p 1 ist, X $-NH_2$ oder $QNH_2$ darstellt, und wenn p 2 ist, X die direkte Bindung, $-CH_2-$ oder $-O-$ darstellt, $R'_4$ und $R'_5$ unabhängig voneinander Wasserstoff, $C_{1-4}$-Alkyl oder Chlor und $R_6$ Wasserstoff oder Chlor bedeuten, mit der Maßgabe, daß nur einer von $R'_4$, $R'_5$ und $R_6$ Chlor ist.

8. Verfahren nach Anspruch 7, worin das Lösungsmittel Essigsäure oder Chlorwasserstoffsäure ist und die Hydrierung bei Raumtemperatur durchgeführt wird.

9. Verfahren nach Anspruch 7, worin der Hydrierungs-Katalysator ein Metall der Gruppe VIII des Periodischen Systems, ein Gemisch davon, das gegebenenfalls andere Metalle enthält, oder ein Oxid davon ist.

10. Verfahren nach Anspruch 7, worin das Lösungsmittel tert.-Butanol und der Katalysator $Rh/Al_2O_3$ ist.

**Claims**

1. A compound having the formula I

$$X{-}(YQNH_2)_p \qquad (I)$$

wherein p is 1 or 2 and the residues $-QNH_2$ are the same or different and each is a residue of formula II:

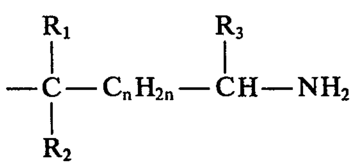

(II)

wherein n is an integer from 1 to 15; $R_1$ is $C_1$—$C_8$alkyl; $R_2$ is $C_1$—$C_4$alkyl; or $R_1$ and $R_2$ together form a $C_4$—$C_7$alkylene group; $R_3$ is hydrogen or $C_1$—$C_6$alkyl, $C_3$—$C_8$cycloalkyl or $C_6$—$C_{10}$aryl; and Y is a divalent residue of the formula:

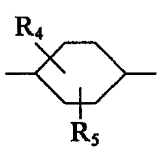

wherein $R_4$ and $R_5$ are hydrogen or $C_1$—$C_4$alkyl or, when p is 1, the group $R_4$, together with the group X, can form a tetramethylene chain substituted by the group $QNH_2$, X is $-NH_2$ or $QNH_2$ or X may be combined with $R_4$ as hereinbefore defined; and, when p is 2, X is a direct bond or is $-CH_2-$ or $-O-$ or a salt thereof with an organic or inorganic acid; or stereo-isomers thereof.

2. A compound of formula I according to claim 1, wherein p is 1.

3. A compound of formula I according to either of claims 1 or 2, wherein p is 1 and X is $-NH_2$.

4. A compound of formula I according to claim 3, wherein p is 1, X is $-NH_2$, $R_4$ and $R_5$ are hydrogen or $C_1$—$C_3$alkyl, $R_1$ is $C_1$—$C_6$alkyl, $R_2$ is $C_1$—$C_3$alkyl and $R_3$ is $C_1$—$C_6$alkyl.

5. A compound of formula I according to claim 4, wherein $R_4$ and $R_5$ are methyl or hydrogen, n is 3, 8 or 9, $R_1$ is $C_1$—$C_4$alkyl, $R_2$ is methyl or ethyl and $R_3$ is $C_1$—$C_4$alkyl.

6. A compound of formula I according to claim 5, wherein $R_1$ is methyl or ethyl, $R_2$ is methyl, $R_3$ is methyl or isopropyl and $R_4$ and $R_5$ are hydrogen.

7. A process for the preparation of a compound of formula I, a salt thereof with an organic or inorganic acid or stereoisomers thereof, according to claim I, which process comprises hydrogenating a compound having the formula III a or III b

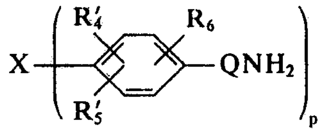

(IIIa)

or

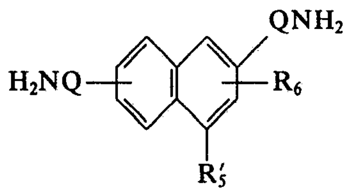

(IIIb)

in which formulae $-QNH_2$ and p are as defined in claim 1, and, when p is 1, X is $-NH_2$ or $QNH_2$ and, when p is 2, X is a direct bond or is $-CH_2-$ or $-O-$; $R'_4$ and $R'_5$ are each independently hydrogen, $C_1-C_4$alkyl or chlorine; and $R_6$ is hydrogen or chlorine, with the proviso that only one of the groups $R'_4$, $R'_5$ and $R'_6$ is chlorine, or a salt thereof with an organic or inorganic acid, in the presence of a metal- or mixed metal catalyst, and in the presence of a solvent which is inert to hydrogen under the reaction conditions.

8. A process according to claim 7, wherein the solvent is acetic acid or hydrochloric acid and the hydrogenation is carried out at room temperature.

9. A process according to claim 7, wherein the hydrogenation catalyst is a metal of group VIII of the Periodic Table, a mixture thereof optionally containing other metals, or an oxide thereof.

10. A process according to claim 7, wherein the solvent tert-butanol and the catalyst is $Rh/Al_2O_3$.

**Revendications**

1. Composés répondant à la formule I:

$$X-(YQNH_2)_p \qquad (I)$$

dans laquelle p est égal à 1 ou à 2, les radicaux $-QNH_2$ sont identiques ou différents et représentent chacun un radical répondant à la formule II:

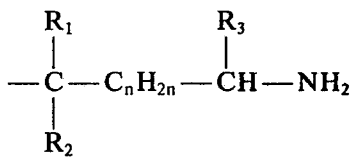

(II)

dans laquelle n désigne un nombre entier de 1 à 15, $R_1$ représente un alkyle en $C_1-C_8$, $R_2$ représente un alkyle en $C_1-C_4$, ou $R_1$ et $R_2$ forment ensemble un radical alkylène en $C_4-C_7$, et $R_3$ représente l'hydrogène, un alkyle en $C_1-C_6$, un cyclo-alkyle en $C_3-C_8$ ou un aryle en $C_6-C_{10}$, Y représente un radical bivalent répondant à la formule:

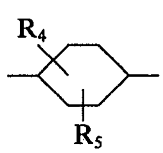

dans laquelle $R_4$ et $R_5$ représentent chacun l'hydrogène ou un alkyle en $C_1-C_4$ ou encore, dans le cas où p est égal à 1, $R_4$ forme avec X une chaîne tétraméthylène portant le radical $-QNH_2$, et X représente un radical $-NH_2$ ou $-QNH_2$, ou encore peut être associé à $R_4$ comme indiqué ci-dessus, et, dans le cas où p est égal à 2, X représente une liaison directe, $-CH_2-$ ou $-O-$, ainsi que les sels que forment ces composés de formule I avec des acides minéraux ou organiques, et les stéréoisomères de composés de formule I.

2. Composés de formule I selon la revendication I, dans lesquels p est égal à 1.

3. Composés de formule I selon l'une des revendications 1 et 2, dans lesquels p est égal à 1 et X représente un radical $-NH_2$.

4. Composés de formule I selon la revendication 3, dans lesquels p est égal à 1, X représente $-NH_2$, $R_4$ et $R_5$ représentent chacun l'hydrogène ou un alkyle en $C_1-C_3$, $R_1$ représente un alkyle en $C_1-C_6$, $R_2$ représente un alkyle en $C_1-C_3$ et $R_3$ représente un alkyle en $C_1-C_6$.

5. Composés de formule I selon la revendication 4, dans lesquels $R_4$ et $R_5$ représentent chacun un méthyle ou l'hydrogène, n est égal à 3, à 8 ou à 9, et $R_1$ représente un alkyle en $C_1-C_4$, $R_2$ un méthyle ou un éthyle et $R_3$ un alkyle en $C_1-C_4$.

6. Composés de formule I selon la revendication 5, dans lesquels $R_1$ représente un méthyle ou un éthyle, $R_2$ un méthyle, $R_3$ un méthyle ou un isopropyle tandis que $R_4$ et $R_5$ représentent chacun l'hydrogène.

7. Procédé de préparation de composés de formule I, de leurs sels dérivant d'acides minéraux ou organiques ainsi que de leurs stéréo-isomères, selon la revendication 1, procédé caractérisé en ce qu'on hydrogène un composé répondant à l'une des formules III a et III b:

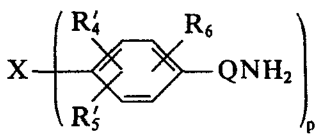

(IIIa)

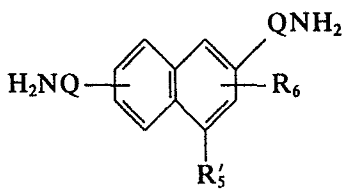

(IIIb)

ou un sel d'un tel composé avec un acide minéral ou organique, en présence d'un catalyseur métallique ou d'un catalyseur mixte à base de métaux et en présence d'un solvant inerte à l'égard de l'hydrogène dans les conditions réactionnelles, les divers symboles présents dans les formules ayant les significations suivantes:

$-QNH_2$ et p ont les significations données à la revendication 1, et lorsque p est égal à 1, X représente $-NH_2$ ou $-QNH_2$, et, lorsque p est égal à 2, X représente la liaison directe ou un radical $-CH_2-$ ou $-O-$, $R'_4$ et $R'_5$ représentent chacun, indépendamment l'un de l'autre, l'hydrogène, un alkyle en $C_1-C_4$ ou le chlore, et $R_6$ représente l'hydrogène ou le chlore, avec la condition que l'un seulement des symboles $R'_4$, $R'_5$ et $R_6$ représente le chlore.

8. Procédé selon la revendication 7 dans lequel le solvant est l'acide acétique ou l'acide chlorhydrique et l'hydrogénation est effectuée à la température ambiante.

9. Procédé selon la revendication 7 dans lequel le catalyseur d'hydrogénation est métal du groupe VIII de la classification périodique, un mélange de tels métaux contenant éventuellement d'autres métaux, ou un oxyde d'un tel métal.

10. Procédé selon la revendication 7 dans lequel le solvant est le butanol tertiaire et le catalyseur est constitué de rhodium sur alumine.